# EUROPÄISCHE PATENTSCHRIFT

(11) **EP 1 035 005 B1**
(45) Veröffentlichungstag und Bekanntmachung des Hinweises auf die Patenterteilung: **06.06.2007**
(21) Anmeldenummer: 00102894.3
(22) Anmeldetag: 12.02.2000
(51) Int. Cl.: B62D 31/02, B62D 47/02

(54) **Omnibusaufbau im seitlichen Dacheckbereich, in der Heckdachkuppel und im Heckeckstollen**
Omnibus structure at the side roof area , the rear roof dome and the roof rear quarter
Structure d'un omnibus dans la zone du côté du toit, de la coupole et du côté arrière

(30) Priorität: 05.03.1999 DE 19909735
(43) Veröffentlichungstag der Anmeldung: 13.09.2000
(73) Patentinhaber: MAN Nutzfahrzeuge Aktiengesellschaft, 80976 München (DE)
(72) Erfinder: Bartha, Ernö, Dipl.-Ing., 38640 Goslar (DE); Krimmling, Harald, Dipl.-Ing., 85259 Altomünster (DE); Sager, Johann, 85235 Odelzhausen (DE); Gabler, Julius, 85221 Dachau (DE)

(56) Entgegenhaltungen:
- GB-A- 524 861
- GB-A- 567 976

## Beschreibung

Die Erfindung betrifft einen Omnibusaufbau nach dem Oberbegriff des Anspruches 1.

Bei den bekannten Omnibusaufbauten ist das Außenblech mit dem Gerippe verschweißt bzw. schweißgepunktet. Wie dies erfolgt, ist "know how" der einzelnen Hersteller, da die Blechwandungen visuell einwandfrei in ihrer Form, z. B. eben, gekrümmt oder gewölbt sein müssen. Nach dem Lackieren sind kleinste Formungleichmäßigkeiten sichtbar und der Kunde würde ein solches Fahrzeug nicht kaufen.

Auch aus diesem Grund hat man zur Stützung des Außenbleches das Gerippe um die Ecken gezogen und über das Seitenwandgerippe abgestützt, so daß die Außenbleche auf dem Gerippe aufliegen und Außenbleche und Gerippe miteinander verschweißt bzw. verpunktet werden können. Auch dieser Vorgang ist "know how" der einzelnen Hersteller, da die Eckereiche kritische Sichtbereiche sind.

Diese Beblechungsart hat aber auch zur Folge, daß Versorgungsleitungen wie Elektrokabel, flüssigkeitsführende Heiz- und Klimatisierungsleitungen, Pneumatikaggregate, elektrische Steuergeräte, Druckluftvorratsbehälter usw. von der Fahrzeuginnenseite her eingebaut werden müssen. Die Einbauarbeiten erfolgen teilweise in der Überkopfmontage, was für die Monteure eine harte Arbeitsbelastung ist.

Wenn nachträglich, aber noch im Montageablauf, ein Gerät eingebaut oder eine Versorgungsleitung eingezogen werden muß, stört das den Montageablauf erheblich, da möglicherweise schon die Innenverkleidung im Motorraum teilweise montiert ist und/oder andere Monteure bei ihrer Arbeit behindert werden.

Noch wesentlich schwieriger sind Wartungsarbeiten oder Reparaturen am fertigen Fahrzeug in diesen Bereichen durchzuführen. Zwar sind Wartungsklappen vorgesehen, aber es können hauptsächlich nur die Aggregate erreicht werden. Wenn an Leitungen etwas zu reparieren ist, oder wenn eine neue Leitung gelegt werden muß, ist der Aufwand groß.

GB 524 861 offenbart einen Omnibusaufbau mit von außen abnehmbaren Außenblechen.

Aufgabe der Erfindung ist es, die geschilderten Probleme durch bessere Zugängigkeit möglichst ganz zu vermeiden.

Die Aufgabe wird erfindungsgemäß durch die Merkmale des Anspruches 1 gelöst.

Dadurch, daß die Außenverblechung im Dacheckbereich, an der Heckdachkuppel und in den Heckeckstollen abnehmbar gestaltet ist, sind Versorgungsleitungen und Aggregate in diesen Bereichen von außen her montier- und wartbar.

Die Vorteile dieser Ausgestaltung sind:
- Reduzierung der Montagezeiten,
- keine Überkopfmontage,
- Nachmontagen sind einfacher,
- Wartung und Reparatur von außerhalb des Busses

Durch die Ausgestaltung ergeben sich Vorteile in Bezug auf Kosten und Qualität. Die abnehmbaren Außenverblechungen bzw. abnehmbaren Eckaußenteile können aus Kunststoffsandwich oder einem gebogenen oder gepreßten Blech, das außen mit einem stabilen Kunststoffüberzug verbunden ist, bestehen. Die Außenschicht des Eckbauteiles kann auf der einen Seite in den Schlitz eines Außenbauteiles, z. B. einer H-förmigen Blende eingesteckt und auf der anderen Seite mit dem zu verbindendem Stahlblech vom Dach oder der Seitenwand beim Heckeckstollen, verschraubt oder anderweitig lösbar verbunden sein.

Die abnehmbaren Eckteile können in der Länge einteilig oder mehrteilig sein, wobei eine Stücklänge zwischen 1 m und 2 m als vorteilhaft erscheint.

In der Zeichnung ist ein Ausführungsbeispiel schematisch dargestellt. Die Ausgestaltung in den Heckeckstollen ist nicht dargestellt, sie gilt aber äquivalent.

Es zeigt:
- Fig. 1: den Querschnitt im Dacheckbereich in Kunststoffsandwich-Bauweise,
- Fig. 2: den Querschnitt im Dacheckbereich in Blech-/Kunststoffbauweise,
- Fig. 3: den Querschnitt im Dacheckbereich, Stand der Technik.

Die Zeichnung zeigt nur den Dacheckbereich (Übergang vom Dach in die Seitenwand). Der Unterschied zur Heckdachkuppel (Übergang vom Dach in die Heckwand) oder zum Heckeckstollen (Übergang je einer Seitenwand in die Heckwand) ist nur in der Rundungsform der abnehmbaren Eckteile gegeben und nicht dargestellt.

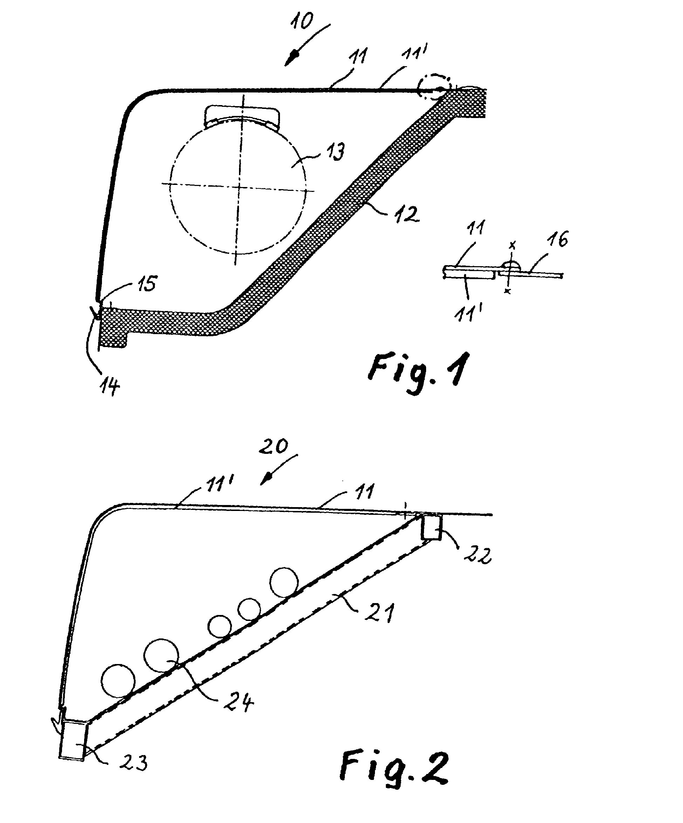

Die Fig. 1 zeigt den Dacheckbereich 10 in Kunststoffsandwich-Bauweise 11, 11'. Das Sandwich 11, 11' weist eine Sichtschicht 11 und mindestens eine weitere Schicht 11', die Tragfunktion und Isolierfunktion hat, auf.

Vorzugsweise hat die Sichtschicht 11 an ihrem einen Ende eine abgewinkelten Überstand 15, der in einen Schlitz (nicht dargestellt) der Regenrinne 14 einsteckbar ist oder der Überstand 15 ist selbst U-förmig (nicht dargestellt) und wird auf den senkrechten Teil der Regenrinne 14 aufgesteckt.

Am anderen Ende des Kunststofsandwichteiles 11, 11' ist vorzugsweise die Sichtschicht 11' mit z.B. dem Dachblech 16 verschraubt oder anderweitig lösbar verbunden. Damit ist das Kunststoffsandwich 11, 11' abnehmbar und die Zugängigkeit, beispielsweise zu einem Druckluftvorratsbehälter 13 oder zu Leitungen 24 (Fig. 2), von der Außenseite des Busses her sehr gut.

Auf der Businnenseite dies gilt auch für die Motorraumauskleidung ist ein Kunststoffintegralteil 12 gezeigt, das in seiner Gestaltung und Wirkung gegenüber Schall und Wärme optimiert sein kann. Wartungsklappen, die nachteilig gegenüber Schall- und Wärmeisolierung sind, sind nicht mehr erforderlich.

Die Fig. 2 zeigt den Eckbereich 20 mit dem abnehmbaren Eckteil 11, 11' und den Gerippeaufbau 21, 22, 23. Das abnehmbare Eckteil könnte ein tragendes Blechteil 11' und eine Kunststoffsichtschicht 11 sein. Die Stütze 21 ist die Verlängerung einer Dachvoute und bildet die Eckaussteifung. Die Stütze 21 ist von außen gesehen hinter die Versorgungsleitungen gelegt, damit von außen her ein uneingeschränkter Zugang zu den Aggregaten 13 und Leitungen 24 möglich ist.

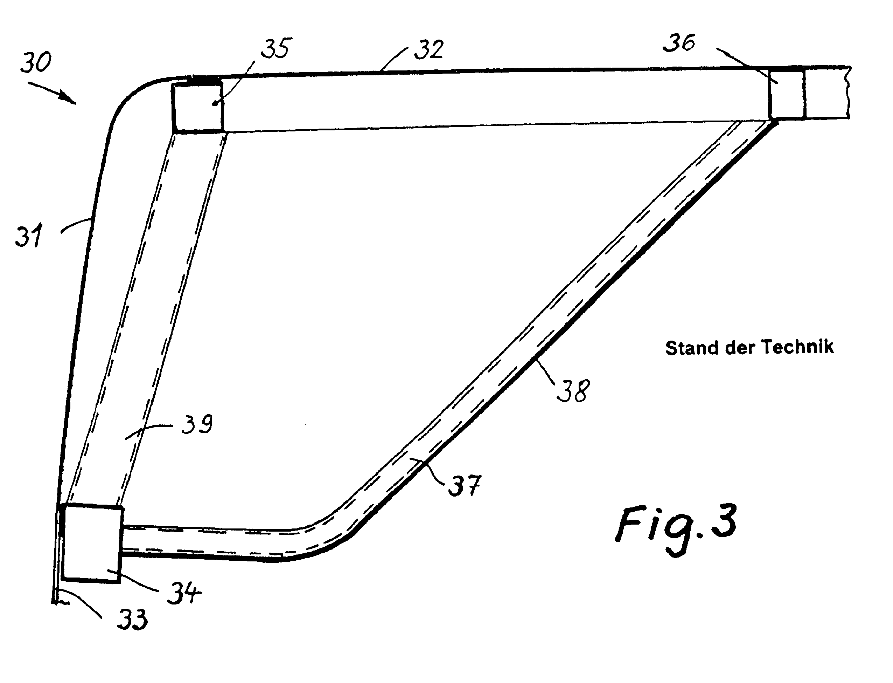

Die Fig. 3 zeigt den Stand der Technik im Dacheckbereich 30. Das Eckblech 31 ist auf seiner unteren Seite mit dem Längsträger 34 und dem Seitenwandblech 33 verschweißt bzw. punktverschweißt.

Auf der anderen Seite ist das Blech 31 mit dem Dachblech 32 und dem Dachlängsträger 35 verschweißt. Damit ist eine Zugängigkeit zu Aggregaten und Leitungen in diesem Bereich nur von der Businnenseite her möglich. Die Stütze 39 stützt den Dachlängsträger 35 ab, damit dieser formstabil für die Tragfunktion der Außenbleche 31, 32 ist.

Der Träger 37 trägt eine Abdeckung 38, die mit Wartungsklappen (nicht gezeichnet) versehen ist.

## Patentansprüche

1. Omnibusaufbau mit je einem Gerippe für die Seitenwände, die Heckwand und für das Dach, mit einer außenliegenden Verblechung, die mit dem entsprechenden Gerippe verschweißt ist und bei dem in Übergängen vom Dach in je eine Seitenwand, vom Dach in die Heckwand und von je einer Seitenwand in die Heckwand, Versorgungsleitungen wie Elektrokabel, Heizungsleitungen und Pneumatikleitungen verlaufen und Geräte wie Pneumatikaggregate, Luftdruckvorratsbehälter, elektrische Steuergeräte und ähnliches eingebaut sind, **dadurch gekennzeichnet, dass** die Außenverblechung (11, 11')in den Übergängen vom Dach in je eine Seitenwand (10, 20), vom Dach in die Heckwand (10, 20) und von je einer Seitenwand in die Heckwand (10, 20), von außen her abnehmbar gestaltet ist und damit die Versorgungsleitungen (24) und Geräte (13) von außen her montierbar und wartbar sind.

2. Omnibusaufbau nach Anspruch 1, **dadurch gekennzeichnet, dass** die von außen her abnehmbare Außenverblechung (11, 11') in ihrer Gesamtlänge jeweils einteilig ist.

3. Omnibusaufbau nach Anspruch 1, **dadurch gekennzeichnet, dass** die von außen her abnehmbaren Außenverblechung (11, 11') in ihrer Gesamtlänge mehrteilig ist.

4. Omnibusaufbau nach Anspruch 1, **dadurch gekennzeichnet, dass** die von außen her abnehmbare Außenverblechung (11, 11') im Querschnitt formstabil ist.

## Claims

1. Bus body with one skeleton each for the side walls, the rear wall and for the roof, with metal sheeting outside which is welded to the corresponding skeleton and in which in the transitions from the roof to each side wall, from the roof to the rear wall and from each side wall to the rear wall, supply lines such as electrical cables, heater lines and pneumatic line are laid and equipment such as pneumatic units, compressed-air reservoirs, electrical control units and similar equipment are fitted, **characterised in that** the outside metal sheeting (11, 11') in the transitions from the roof to each side wall (10,20), from the roof to the rear wall (10,20) and from each side wall to the rear wall (10, 20) is designed to be removable from outside and hence the supply lines (24) and equipment (13) can be mounted and maintenance carried out from the outside.

2. Bus body in accordance with claim 1, **characterised in that** the overall length of the outside metal sheeting (11, 11') removable from the outside is in one piece.

3. Bus body in accordance with claim 1, **characterised in that** the overall length of the outside metal sheeting (11, 11') removable from the outside is in several pieces.

4. Bus body in accordance with claim 1, **characterised in that** the outside metal sheeting (11, 11') removable from the outside (11, 11') has an inherently stable cross section.

## Revendications

1. Carrosserie de bus avec à chaque fois une ossature pour les parois latérales, la paroi arrière et le pavillon, avec des tôles extérieures soudées avec l'ossature correspondante dans laquelle passent des conduites d'approvisionnement tels que des câbles électriques, des conduites de chauffage et des conduites pneumatiques dans des passages du pavillon à chacune des parois latérales, du pavillon à la paroi arrière et de chaque paroi latérale à la paroi arrière et sont montés des appareils tels que des organes pneumatiques, des réservoirs d'alimentation en air comprimé, des boîtiers électroniques et des appareils similaires, **caractérisée en ce que** les tôles extérieures (11, 11') passant du pavillon à chacune des parois latérales (10, 20), du pavillon à la paroi arrière (10, 20) et de chacune des parois latérales à la paroi arrière (10, 20) sont conçus de manière amovible de l'extérieur et, de ce fait, les conduites d'approvisionnement (24) et les appareils (13) peuvent être montés et soumis à des travaux de maintenance de l'extérieur.

2. Carrosserie de bus selon la revendication 1, **caractérisée en ce que** les tôles extérieures (11, 11') amovibles de l'extérieur sont composées à chaque fois d'une seule pièce dans leur longueur totale.

3. Carrosserie de bus selon la revendication 1, **caractérisée en ce que** les tôles extérieures (11, 11') amovibles de l'extérieur sont composées à chaque fois de plusieurs pièces dans leur longueur totale.

4. Carrosserie de bus selon la revendication 1, **caractérisée en ce que** les tôles extérieures (11, 11') amovibles de l'extérieur possèdent une forme stable en section.
